# EUROPÄISCHE PATENTSCHRIFT

(11) **EP 1 806 223 B1**
(45) Veröffentlichungstag und Bekanntmachung des Hinweises auf die Patenterteilung: **21.11.2012**
(21) Anmeldenummer: 07000355.3
(22) Anmeldetag: 09.01.2007
(51) Int. Cl.: B32B 5/06, D04H 13/00, D06N 7/00, E04F 13/16, E04F 15/10, E04F 15/16

(54) **Bahnförmiges Material mit einer Deckschicht und mit einer Trägerschicht**
Sheet-like material with a coating layer and a substrate
Matériel en forme de bande doté d'une couche de recouvrement et d'une couche de support

(30) Priorität: 09.01.2006 DE 102006001098
(43) Veröffentlichungstag der Anmeldung: 11.07.2007
(73) Patentinhaber: TESCH, Günter, 1700 Fribourg (CH)
(72) Erfinder: TESCH, Günter, 1700 Fribourg (CH)
(74) Vertreter: Lesser, Karl-Bolko

(56) Entgegenhaltungen:
- WO-A-93/22487
- DE-A- 60 015
- DE-A1- 4 244 250
- GB-A- 105 864
- US-A- 4 424 248

## Beschreibung

Die Erfindung betrifft ein bahnförmiges Material mit einer Deckschicht und mit einer Trägerschicht.

### Stand der Technik

Ein bahnförmiges Material mit einer Deckschicht und mit einer Trägerschicht ist z.B. als Linoleum allgemein bekannt.

Linoleum wird schon sehr lange hergestellt und es wird auch schon sehr lange daran gearbeitet einen linoleum-ähnlichen Bodenbelag herzustellen.

Das herkömmliche Linoleum besteht im Wesentlichen aus einem Gemisch aus Leinöl und gemahlenem Kork, das auf einer Trägerschicht, insbesondere ein Gewebe aufgetragen wird. Das aufgetragene und abgebundene Gemisch aus nachwachsenden Rohstoffen bildet eine wasserdichte Deckschicht.

Der gesamte Produktionsprozess dauert bei der Produktion von Linoleum insbesondere wegen der langen Reifezeit des Linoleums sehr lange, weshalb schon vor weit über 100 Jahren nach einem Verfahren gesucht wurde einen linoleum-ähnlichen Bodenbelag herzustellen.

In der DE 97 932 aus dem Jahre 1897 wird beschrieben, dass es damals schon bekannt war, den Kork durch andere Stoffe zu ersetzen, und auf die DE 60 0015 verwiesen, in der beschrieben ist, anstelle des Korkes gemahlenes Leder in Form von Rohleder einzusetzen. Die DE 97 932 selbst lehrt, anstelle des gemahlenen Korkes bzw. des gemahlenen Rohleders geröstetes Leder in fein gemahlenen Zustand (sogenannte Lederkohle oder Ledermehl) zu benutzen, dieses mit oxidierten Leinöl und eventuell von Klebemitteln und Harzen zu einem steifen Brei zu mischen und diesen Brei auf ein festes, grobes Gewebe so aufzutragen, dass das Gewebe nicht hervortritt. Das Ganze wird dann noch dicht gewalzt oder gepresst.

Das Linoleum und auch die bisher bekannten linoleum-ähnlichen Bodenbeläge sind relativ schwer, insbesondere aber auch schwer zu verlegen. Auch sind die Herstellungsverfahren sehr aufwendig.

Die alte Herstellungsmethode von Linoleum wurde bisher nie richtig modernisiert und es sind immer noch riesige Produktionsräume sowohl flächen- als auch höhenmäßig notwendig, da die Bindemittelreifung sehr viel Zeit in Anspruch nimmt und die zu reifenden Linoleum-Bahnen in der Regel hängend angeordnet sind. Dadurch ist die Produktion relativ langwierig und in Partiegröße und schneller Nachlieferung begrenzt. Deshalb gibt es weltweit nur sehr wenige Produktionsanlagen für Linoleum.

Die ursprüngliche Idee nachwachsende Rohstoffe und luftenthaltenden Rindenkork zu verwenden, wurde durch das Mahlen des Korkes und damit das einhergehende Beseitigen der an sich günstigen Lufteinschlüsse technisch falsch gelöst. Der Ersatz des Korkes durch leichter färbbares Holzmehl war ein Versuch, der jedoch zu schlechteren Eigenschaften des Linoleums führte.

Auch gelang nie ein Übergang zu moderneren Fertigungsmethoden. Die Musterungsmöglichkeiten sind auf einfarbige, jasperierte und moirierte Optiken begrenzt.

Elastischere Rückenschichten lassen sich kaum ohne ein Trennungsrisiko anbringen. Trotz Berühmung als elastischer Bodenbelag ist Linoleum ein Produkt mit einem niedrigen Dezibel-Wert in der Trittschallminderung. Bei der Verlegung von Linoleum müssen die Nähte zwischen benachbarten Bahnen mit einer Verschweißung versehen werden, was nicht immer optimal vom Verleger zu erreichen ist. Um die Oberfläche dauerhaft erhalten zu können wird heutzutage auf das Linoleum eine relativ teure Polyurethan-Beschichtung aufgetragen.

All dies führt dazu, dass Linoleum ein sehr teurer Bodenbelag ist.

### Erfindung

Der Erfindung liegt deshalb die Aufgabe zugrunde ein bahnförmiges Material mit einer Deckschicht aus nachwachsenden Rohstoffen und mit einer Trägerschicht zu schaffen, das nicht nur leichter als herkömmliche Linoleum- oder linoleumähnliche Beläge ist, sondern das sich aufgrund der Verwendung ganz anderer Verfahren auch einfacher und preiswerter herstellen, verlegen und pflegen lässt.

Diese Aufgabe wird durch ein bahnförmiges Material gelöst, bei dem die Deckschicht mindestens passive nadelbare Lederteilchen aufweist, die mittels textiler Fasern mit der Trägerschicht vernadelt sind.

Als solche Lederteilchen sind. Lederspäne in der Deckschicht angeordnet, die als Reste aus der Lederverarbeitung günstig zu erhalten sind. Die Lederspäne haben eine Länge von 3 bis 20 mm. Damit sind sie passiv vernadelbar und geben der Deckschicht des bahnförmigen Material eine weitere Festigkeit.

Dieses bahnförmige Material mit einem hohen Anteil an nachwachsenden Rohstoffen kann kontinuierlich und gut kontrollierbar in großen Partien hergestellt werden. Leder mit seiner natürlichen Elastizität und Ausgleichsmöglichkeit von Luftfeuchte und auch Geruchsaufnahmefähigkeit ähnlich natürlicher Wolle macht es zu einem wertvollen Rohstoff, der allerdings bisher noch nicht zu einem erfolgreich haltbaren und leicht bahnförmigen Material verarbeitet werden konnte.

Dies wird nun insbesondere durch die Vernadelung erreicht, durch die sich weitere Gestaltungsmöglichkeiten eröffnen, dies sich aus den folgenden Darstellungen ergeben.

Die Deckschicht weist zwischen 40% und 80% Lederteilchen auf.

Die Deckschicht kann neben den Lederteilchen noch Wolle und / oder andere textile Fasern aufweisen, wodurch die Musterung der Deckschicht gestaltet werden kann.

Die textilen Fasern können dabei natürliche oder künstliche Fasern sein.

Gemäß einer besonderen Ausfiihrungsform der Erfindung weist die die Lederteilchen enthaltende Deckschicht eine bindende Masse auf, die die Deckschicht vollständig durchdringt. Durch diese bindende Masse wird die Deckschicht nicht nur in sich gebunden, sondern zusätzlich auch an der Trägerschicht gebunden.

Diese bindende Masse kann ein SBR-Latex, ein Acrylatbinder oder ein Natur-Latex, ein tierischer oder pflanzlicher Leim, eine Stärke oder Stärkederivate sein, wobei die bindende Masse z. B. durch Pflatschen des bahnförmigen Materials von Seiten der Deckschicht her in diese eingebracht wurde. Die bindende Masse kann auch von unten in das bahnförmige Material oder durch Tränken in dieses eingebracht werden.

Vorzugsweise ist oben auf der gebundenen Deckschicht eine abriebfeste Masse angeordnet, die die gesamte Deckschicht überdeckt und zweckmäßigerweise transparent ist.

Gemäß einer speziellen Ausfiihrungsform macht die abriebfeste Masse das bahnförmige Material zumindest von der Oberseite her wasserdicht. Die Deckschicht des bahnförmigen Materials kann dadurch mit Flüssigkeiten gereinigt werden.

Diese abriebfeste Masse kann aus verschiedenen Isomeren, insbesondere einem Gemisch verschiedener isomerer Materialien bestehen.

Durch diese Masse hindurch bleibt zum einen die Musterung der Deckschicht sichtbar, zum anderen wird diese zusätzlich verstärkt, insbesondere dann, wenn die abriebfeste Masse zumindest zum Teil auch in der Deckschicht eingedrungen vorliegt.

Die abriebfeste Masse kann auch so ausgebildet und angeordnet sein, dass das bahnförmige Material zumindest von der Oberseite her wasserdicht ist, wobei zweckmäßigerweise noch eine Dampfdurchlässigkeit zumindest von Seite der Trägerschicht zur Oberseite der Deckschicht vorhanden ist.

Vorzugsweise besteht die abriebfeste Masse aus einem Polyurethan.

Die Trägerschicht kann, wie bei anderen bahnförmigen, insbesondere genadelten Materialien als solches bekannt, aus einem Gelege, einem Gewebe, einem Spunbond oder aus einem Non-woven bestehen. Dadurch erhält die gesamte Bahn eine größere Stabilität.

Weitere Einzelheiten der Erfindung ergeben sich aus den Unteransprüchen und aus einem im Folgenden beschriebenen Ausführungsbeispiel.

### Ausführungsbeispiele

Auf einer Trägerschicht, die ein passiv nadelfähiges Flächengebilde ist, wie ein Gelege, ein Gewebe, ein Spunbond oder ein Non-woven, ist eine Deckschicht mit zumindest passiv vernadelbaren Lederteilchen angeordnet und mit der Trägerschicht mittels aktiv vernadelbarer, textiler Fasern vernadelt.

Diese Deckschicht besteht in dem hier beschriebenen Ausführungsbeispiel zu etwa 80 Gewichtsprozent aus feinen Lederteilchen, wie Lederspänen mit einer maximalen Länge von etwa 3 mm und etwa 20 Gewichtsprozent textilen, vernadelbaren Fasern.

Bei einer anderen Ausfiihrungsform besteht die Deckschicht zu etwa 60 Gewichtsprozent aus feinen Lederteilchen wie Lederspänen, etwa 20 Gewichtsprozent Lederpulver, etwa 5 Gewichtprozent textilen Fasern und zu etwa 15 Gewichtsprozent einer die gesamte Deckschicht stärkenden, mit den Lederteilchen und den Fasern verbundenen abriebfesten Kunststoffmasse aus einem Polymer, wie einem Polyurethan.

Diese Kunststoffmasse, die - hier - nicht nur die gesamte Deckschicht durchdringt, sondern auch auf der Oberfläche derselben vorhanden ist, verleiht im gebundenen Zustand dem bahnförmigen Material eine geschlossene Oberfläche auf der Sichtseite.

Damit die Masse die Deck- und Sichtschicht durchdringt, wird bei der Herstellung das noch nicht gebundene Kunststoff-Material in Form von Pulver auf den genadelten Belag gegeben und durch Rütteln des Belages dringt das Pulver mehr oder weniger weit in die Deck- und Sichtschicht ein und durchdringt diese. Bei den meisten Anwendungen wird so viel Pulver auf die Deckschicht aufgegeben, dass auch die Oberseite der Deckschicht nach dem Verbinden des Kunststoff-Materials noch von der Masse bedeckt ist.

Das Verbinden erfolgt durch Erwärmen bzw. Erhitzen des bahnförmigen Materials bis zur Bindetemperatur der abriebfesten Masse.

Alternativ kann das pulverförmige Kunststoff-Material auch mit dem Ledermaterial gemischt werden, bevor diese Mischung auf die Trägerschicht aufgebracht wird.

Das Verfahren zur Herstellung des erfindungsgemäßen bahnförmigen Materials ist nicht Gegenstand vorliegender Erfindung und dem Fachmann sind die einzelnen Arbeitsschritte als solches bekannt, soweit sie nicht hier beschrieben wurden.

## Patentansprüche

1. Bahnförmiges Material mit einer Deckschicht und mit einer Trägerschicht, **dadurch gekennzeichnet, dass**
- die Deckschicht mindestens passiv nadelbare Lederteilchen aufweist, die mittels textiler Fasern mit der Trägerschicht vernadelt sind,
- als Lederteilchen Lederspäne in der Deckschicht angeordnet sind, die vorzugsweise eine Länge von 3 bis 20 mm aufweisen, und
- die Deckschicht zwischen 40% und 80% Lederteilchen aufweist.

2. Bahnförmiges Material nach einem der vorhergehenden Ansprüche, **dadurch gekennzeichnet, dass** die Deckschicht neben den Lederteilchen noch Wolle und / oder andere textile Fasern aufweist.

3. Bahnförmiges Material nach einem der vorhergehenden Ansprüche, **dadurch gekennzeichnet, dass** die textilen Fasern natürliche oder künstliche Fasern sind.

4. Bahnförmiges Material nach einem der vorhergehenden Ansprüche, **dadurch gekennzeichnet, dass** die die Lederteilchen enthaltende Deckschicht eine bindende Masse aufweist, die die Deckschicht vollständig durchdringt.

5. Bahnförmiges Material nach Anspruch 4, **dadurch gekennzeichnet, dass** die bindende Masse ein SBR-Latex, ein Acrylatbinder oder ein Natur-Latex, ein tierischer oder pflanzlicher Leim, eine Stärke oder Stärkederivate ist.

6. Bahnförmiges Material nach Anspruch 4 oder 5, **dadurch gekennzeichnet, dass** die bindende Masse durch Pflatschen des bahnförmigen Materials von Seiten der Deckschicht her in diese eingebracht wurde.

7. Bahnförmiges Material nach Anspruch 4 oder 5, **dadurch gekennzeichnet, dass** die bindende Masse von unten in das bahnförmige Material oder durch Tränken in dieses eingebracht wurde.

8. Bahnförmiges Material nach einem der vorhergehenden Ansprüche, **dadurch gekennzeichnet, dass** oben auf der gebundenen Deckschicht eine abriebfeste Masse angeordnet ist, die die gesamte Deckschicht überdeckt.

9. Bahnförmiges Material nach Anspruch 8, **dadurch gekennzeichnet, dass** die abriebfeste Masse das bahnförmige Material zumindest von der Oberseite her wasserdicht macht.

10. Bahnförmiges Material nach Anspruch 8 oder 9, **dadurch gekennzeichnet, dass** die abriebfeste Masse aus verschiedenen Isomeren, insbesondere einem Gemisch verschiedener isomerer Materialien besteht.

11. Bahnförmiges Material nach einem der vorhergehenden Ansprüche 8 bis 10, **dadurch gekennzeichnet, dass** die abriebfeste Masse aus einem transparenten isomeren Material besteht.

12. Bahnförmiges Material nach einem der vorhergehenden Ansprüche 8 bis 11, **dadurch gekennzeichnet, dass** die abriebfeste Masse aus einem Polyurethan besteht.

13. Bahnförmiges Material nach einem der vorhergehenden Ansprüche, **dadurch gekennzeichnet, dass** die Trägerschicht aus einem Gelege, einem Gewebe, einem Spunbond oder aus einem Non-woven besteht.

## Claims

1. Material in the form of web with an outer layer and with a backing layer, **characterized in that**
- the outer layer comprises at least passively needleable leather particles needled with the backing layer by means of textile fibres,
- the arrangement has, as leather particles in the outer layer, small pieces of leather waste from cutting processes, where the length of these is preferably from 3 to 20 mm, and
- the outer layer comprises from 40% to 80% of leather particles.

2. Material in the form of a web according to any of the preceding claims, **characterized in that** the outer layer also comprises, alongside the leather particles, wool and/or other textile fibres.

3. Material in the form of a web according to any of the preceding claims, **characterized in that** the textile fibres are natural or synthetic fibres.

4. Material in the form of a web according to any of the preceding claims, **characterized in that** the outer layer comprising the leather particles comprises a binding composition which completely penetrates the outer layer.

5. Material in the form of a web according to Claim 4, **characterized in that** the binding composition is an SBR latex, an acrylate binder or a natural latex, an animal or vegetable glue, a starch or starch derivatives.

6. Material in the form of a web according to Claim 4 or 5, **characterized in that** the binding composition was introduced into the outer layer by padding of the material in the form of a web, from the outer-layer side.

7. Material in the form of a web according to Claim 4 or 5, **characterized in that** the binding composition was introduced from below into the material in the form of a web or by a saturation process into the same.

8. Material in the form of a web according to any of the preceding claims, **characterized in that** the arrangement has, above, on the bound outer layer, an abrasion-resistant composition which covers the entire outer layer.

9. Material in the form a web according to Claim 8, **characterized in that** the abrasion-resistant composition waterproofs at least the upper side of the material in the form of a web.

10. Material in the form of a web according to Claim 8 or 9, **characterized in that** the abrasion-resistant composition is composed of various isomers, in particular of a mixture of various isomeric materials.

11. Material in the form of a web according to any of the preceding Claims 8 to 10, **characterized in that** the abrasion-resistant composition is composed of a transparent isomeric material.

12. Material in the form of a web according to any of the preceding Claims 8 to 11, **characterized in that** the abrasion-resistant composition is composed of a polyurethane.

13. Material in the form of a web according to any of the preceding claims, **characterized in that** the backing layer is composed of a laid scrim, of a woven, of a spunbond or of a non-woven.

## Revendications

1. Matériau en forme de bande comportant une couche de recouvrement et une couche de support, **caractérisé en ce que**
- la couche de recouvrement comporte des particules de cuir au moins passivement aptes à l'aiguilletage, qui sont aiguilletées au moyen de fibres textiles avec la couche de support,
- en tant que particules de cuir sont disposés dans la couche de recouvrement des copeaux de cuir qui présentent de préférence une longueur de 3 à 20 mm, et
- la couche de recouvrement comporte entre 40 % et 80 % de particules de cuir.

2. Matériau en forme de bande selon l'une quelconque des revendications précédentes, **caractérisé en ce qu'**en plus des particules de cuir la couche de recouvrement comporte encore de la laine et/ou d'autres fibres textiles.

3. Matériau en forme de bande selon l'une quelconque des revendications précédentes, **caractérisé en ce que** les fibres textiles sont des fibres naturelles ou des fibres synthétiques.

4. Matériau en forme de bande selon l'une quelconque des revendications précédentes, **caractérisé en ce que** la couche de recouvrement contenant les particules de cuir comporte une matière de liaison qui pénètre dans la totalité de la couche de support.

5. Matériau en forme de bande selon la revendication 4, **caractérisé en ce que** la matière de liaison est un latex SBR, un liant acrylate ou un latex naturel, une colle animale ou végétale, un amidon ou dérivé d'amidon.

6. Matériau en forme de bande selon la revendication 4 ou 5, **caractérisé en ce que** la matière de liaison a été introduite dans la couche de recouvrement par placage du matériau en forme de bande de part et d'autre de celle-ci.

7. Matériau en forme de bande selon la revendication 4 ou 5, **caractérisé en ce que** la matière de liaison a été introduite par le dessous dans le matériau en forme de bande ou par imprégnation dans celui-ci.

8. Matériau en forme de bande selon l'une quelconque des revendications précédentes, **caractérisé en ce qu'**au-dessus de la couche de recouvrement liée est disposée une matière résistante à l'abrasion, qui recouvre la totalité de la couche de recouvrement.

9. Matériau en forme de bande selon la revendication 8, **caractérisé en ce que** la matière résistante à l'abrasion rend le matériau en forme de bande imperméable à l'eau au moins par la face supérieure.

10. Matériau en forme de bande selon la revendication 8 ou 9, **caractérisé en ce que** la matière résistante à l'abrasion consiste en divers isomères, en particulier en un mélange de divers matériaux isomères.

11. Matériau en forme de bande selon l'une quelconque des revendications 8 à 10 précédentes, **caractérisé en ce que** la matière résistante à l'abrasion consiste en un matériau isomère transparent.

12. Matériau en forme de bande selon l'une quelconque des revendications 8 à 11 précédentes, **caractérisé en ce que** la matière résistante à l'abrasion consiste en un polyuréthane.

13. Matériau en forme de bande selon l'une quelconque des revendications précédentes, **caractérisé en ce que** la couche de support consiste en un voile, un tissu, un spunbound ou un non-tissé.
